# EUROPÄISCHE PATENTANMELDUNG

(11) **EP 1 650 556 A1**
(43) Veröffentlichungstag der Anmeldung: **26.04.2006**
(21) Anmeldenummer: 05022793.3
(22) Anmeldetag: 19.10.2005
(51) Int. Cl.: G01N 23/10, C08K 3/30

(54) **Verfahren zum Verhindern des Einschleusens von Dichtungsteilen und/oder Verpackungsteilen in fliessfähige Lebensmittel**

(30) Priorität: 19.10.2004 DE 102004050918
(71) Anmelder: HIPP & CO, 6072 Sachseln (CH)
(72) Erfinder: Ehrmeier, Herbert, 86579 Waidhofen (DE)
(74) Vertreter: Grünecker, Kinkeldey, Stockmair & Schwanhäusser Anwaltssozietät

(57) **Zusammenfassung**

Die Erfindung betrifft ein Verfahren zum Verhindern des Einschleusens von Dichtungsteilen, Teilen der Verpackung von Ausgangsstoffen und/oder Teilen von Verpackungseinheiten in Verpackungseinheiten fließfähiger Lebensmittel sowie eine mit einem Marker versehene Dichtung, Verpackung von Ausgangsstoffen für eine Produktionsanlage für Lebensmittel und Verpackungseinheiten für Lebensmittel aus einer Lebensmittelproduktion.

## Beschreibung

Die Erfindung betrifft ein Verfahren zum Verhindern des Einschleusens und/oder des sicheren Detektierens nach Einschleusen von Dichtungsteilen und/oder Teilen der Verpackung von Ausgangsstoffen in Verpackungseinheiten und/oder von Teilen von unerkannt oder erkannt zu Bruch gegangenen Verpackungseinheiten in nachfolgende Verpackungseinheiten fließfähiger Lebensmittel sowie eine mit einem Marker versehene Dichtung, eine mit einem Marker versehene Verpackung von Ausgangsstoffen und/oder mit einem Marker versehene Verpackungseinheiten für eine Produktionsanlage für Lebensmittel.

Zahlreiche Lebensmittel, wie Milchprodukte, Babynahrung, Breis oder Säfte, werden in großem Maßstab industriell in Anlagen hergestellt, die an vielen Stellen, wie an Rohrstößen oder Pumpanschlüssen, aus Kunststoff, wie Silicon, bestehende Dichtungen enthalten. Dabei kommt es immer wieder vor, dass Dichtungen oder Teile von Dichtungen mit den in den Anlagen hergestellten Lebensmitteln in deren Verpackungseinheiten gelangen. Ferner hat sich in der Praxis gezeigt, dass beim Auspacken von Ausgangsstoffen für die Lebensmittelherstellung, die in Kunststoffverpackungen angeliefert werden, Teile der Verpackung an den Ausgangsstoffen haften bleiben und ebenfalls in die Anlage und letztendlich in die Verpackungseinheiten der hergestellten Lebensmittel gelangen. Dies ist namentlich bei tiefgefrorenen Ausgangsstoffen der Fall, bei denen Teile der Gefrierverpackungen beim Auspacken an den gefrorenen Ausgangsstoffen haften bleiben. Schließlich kommt es immer wieder vor, dass Verpackungseinheiten, in welche die fließfähigen Lebensmittel abgefüllt werden, unerkannt zu Bruch gehen bzw. Teile dieser erkannt zu Bruch gegangenen Verpackungseinheiten unerkannt im Produktionsablauf verbleiben und so unerkannt in nachfolgende Verpackungseinheiten gelangen.

Da Dichtungen, Verpackungen der Ausgangsstoffe und/oder Verpackungseinheiten in der Regel aus Kunststoff oder Glas bestehen, sind sie im Lebensmittelfluß in einer Anlage zum Herstellen von Lebensmitteln schwer oder gar nicht detektierbar.

Aus der DE 43 26 765 ist zwar ein Verfahren zum Erkennen von Fremdkörpern in flüssigen oder viskosen Lebensmitteln bekannt, bei dem die Lebensmittel vor dem Abfüllen mittels Ultraschall auf Fremdkörper untersucht werden. Nachteilig an diesem Verfahren ist es jedoch, dass nicht zwischen Fremdkörpern und gegebenenfalls erwünschten, ebenfalls mittels Ultraschall detektierbaren Inhaltsstoffen, wie Stückchen von Lebensmitteln, unterschieden werden kann.

Generell sind als Detektionsgeräte Metallcheck-Geräte vor der Abfüllung (nicht nach der Abfüllung wegen Metalldeckel) und Röntgenkontrollgeräte nach Abfüllung jeweils mit Ausschleusungstechnik bekannt. Jedoch wird auch damit nicht sichergestellt, dass Fremdkörper vor dem Abfüllen oder nach dem Abfüllen in Verpackungseinheiten erkannt werden.

Der Erfindung lag daher die Aufgabe zugrunde, ein Verfahren bereit zu stellen, mit dem Dichtungen, Verpackungen der Ausgangsstoffe und/oder Teile von zu Bruch gegangener Verpackungseinheiten von Lebensmitteln in Lebensmitteln vor deren Auslieferung sicher detektiert und ausgeschleust werden können.

Die Lösung der Aufgabe ist ein Verfahren zum Verhindern des Einschleusens von Dichtungsteilen und/oder Teilen der Verpackung von Ausgangsstoffen in Verpackungseinheiten und/oder von unerkannt oder erkannt zu Bruch gegangenen Teilen von Verpackungseinheiten in nachfolgende Verpackungseinheiten fließfähiger Lebensmittel, die gegebenenfalls in einem Dichtungen enthaltenden Herstellungssystem, gegebenenfalls unter Verwendung von aus Verpackungen entnommenen Ausgangsstoffen, hergestellt und in Verpackungseinheiten abgefüllt werden, wobei
a) die Dichtungen, Verpackungen der Ausgangsstoffe und/oder Verpackungseinheiten der fließfähigen Lebensmittel mit einem berührungslos detektierbaren Marker versehen sind und/oder werden;
b) vor dem Einbringen der Lebensmittel in die Verpackungseinheiten der Lebensmittelfluß an einem auf den Marker ansprechenden Detektor vorbei geleitet wird und/oder nach dem Einbringen der Lebensmittel in die Verpackungseinheit die mit dem Lebensmittel befüllte Verpackungseinheit an einem auf den Marker ansprechenden Detektor vorbei geleitet wird, und
c) detektierte Dichtungsteile und/oder Teile der Verpackung von Ausgangsstoffen vor Erreichen der Verpackungseinheiten ausgeschleust werden und/oder
detektierte Verpackungseinheiten ausgeschleust werden.

Das erfindungsgemäße Verfahren ist zum sicheren Erkennen und Ausschleusen von Dichtungsteilen und/oder Teilen der Verpackung von Ausgangsstoffen vor dem Abfüllen von fließfähigen Lebensmitteln aus einer industriellen Produktionsanlage für Lebensmittel in die Verpackungseinheiten geeignet. Des weiteren in das erfindungsgemäße Verfahren auch zum sicheren Erkennen und Ausschleusen von Teilen von Verpackungseinheiten, die erkannt oder unerkannt zu Bruch gegangen und in dem Produktionsablauf der Lebensmittel verblieben sind, selbst nach dem Abfüllen der Lebensmittel aus einer industriellen Produktionsanlage für Lebensmittel in Verpackungseinheiten geeignet.

Solche Anlagen umfassen in der Regel Rohrleitungen, Pumpen, Behälter zum Mischen und Verarbeiten der Lebensmittel, Förderschnecken für die Lebensmittel, Sortier- und Mahlvorrichtungen sowie Dosiervorrichtungen, die jeweils mit Dichtungen verbunden sind. Diese Dichtungen oder Teile davon können durch Abnutzung oder Materialermüdung oder infolge fehlerhaften Einlegens in die Produktionsanlage, wie in eine Rohrverbindung, in den Lebensmittelfluß eingebracht werden. Außerdem können durch das Anhaften von Teilen der Verpackung der Ausgangsstoffe an die eingesetzten Lebensmittel bzw. Ausgangsstoffen für die Herstellung der fertigen Lebensmittel diese in das Herstellungssystem und damit in den Lebensmittelfluß geraten.

Diese Fremdkörper können mit dem erfindungsgemäßen Verfahren vor und/oder nach dem Abfüllen, bevorzugt vor dem Abfüllen, der fertigen Lebensmittel in Verpackungseinheiten sicher ausgeschleust werden.

Außerdem kann mit dem erfindungsgemäßen Verfahren auch verhindert werden, dass Teile von zu Bruch gegangenen Verpackungseinheiten selbst, die in den Produktionsablauf eingebracht werden, in nachfolgende Verpackungseinheiten eingebracht werden.

Das erfindungsgemäße Verfahren wird bevorzugt bei der Herstellung von flüssigen, viskosen oder pulverförmigen Lebensmitteln, bevorzugt von flüssigen oder viskosen Lebensmitteln verwendet. Die flüssigen, viskosen oder pulverförmigen Lebensmittel sind bevorzugt Milchprodukte, wie Konsummilch, Sauermilch, Milchmischgetränke, Frischmilcherzeugnisse, Sahne, Kondensmilch oder Milchfertigbrei in Trockenform, Babynahrung, wie Säuglingsmilchnahrungen, Folgemilch, Babybreie, Gemüsebrei, wie Karottenbrei, Getreide- und Milchfertigbreie, Babykost im Glas mit Fleisch, Gemüse-, Getreide und/oder Fruchtkomponente, Kindermenues, Cerealien, wie Müslis oder Extruderprodukte, oder Getränke wie Säfte, Fruchtsaftmischgetränke, Mehrfruchtsäfte oder Tees.

Die mit dem erfindungsgemäßen Verfahren zu detektierenden Dichtungsteile und/oder Teile der Verpackung von Ausgangsstoffen und/oder Teile von Verpackungseinheiten, sind entweder Teile von Dichtungen oder die Dichtungen selbst oder Teile der Verpackung oder die Verpackungen selbst.

Unter "Verpackungseinheiten" im Sinne der Erfindung werden die Behältnisse, wie Tüten, Behälter, Gläser etc. verstanden, in die das fertige, aus einer industriellen Anlage zur Herstellung von Lebensmitteln stammende Lebensmittel abgefüllt und letztlich an die Händler oder Endverbraucher ausgeliefert wird.

Die Dichtungen umfassen bevorzugt einen Kunststoff, wie Silicon. Die Verpackungen der Ausgangsstoffe und die Verpackungseinheiten für die fertigen Lebensmittel umfassen bevorzugt einen Kunststoff, wie Polyolefin, beispielsweise einem Polyethylen oder Polypropylen und/oder Polyester, beispielsweise einem Polyethylenterephthalat, bevorzugt ein Polyolefin, wie ein Polyethylen. Außerdem können die Verpackungseinheiten Glas umfassen.

Die mit dem erfindungsgemäßen Verfahren zu detektierenden Dichtungsteile und/oder Teile der Verpackung von Ausgangsstoffen und/oder Teile von Verpackungseinheiten sind nach Schritt a) bevorzugt mit wenigstens einem mittels Röntgenstrahlung oder einem elektromagnetischen Feld detektierbaren Stoff bzw. Marker markiert. Verbindungen, die mittels Röntgenstrahlung detektiert werden können, sind beispielsweise bariumhaltige Kontrastmittel, wie Ba₂SO₄. Verbindungen, die einem elektromagnetischen Feld detektiert werden können sind beispielsweise eisenhaltige Verbindungen, wie Eisencarbonylverbindungen, insbesondere Fe₂(CO)₉. Bevorzugt können sowohl eine mittels Röntgenstrahlung, als auch eine mittels elektromagnetischem Feld detektierbare Verbindung in den Dichtungsteilen und/oder Teilen der Verpackung von Ausgangsstoffen und/oder Teilen von Verpackungseinheiten anwesend sein, insbesondere ein Kontrastmittel, wie BaSO₄, und eine eisenhaltige Verbindung, wie Fe₂(CO)₉. Insbesondere sind die Marker Verbindungen, die gemäß dem deutschen Lebensmittelrecht, namentlich der Bedarfsgegenständeverordnung und der deutschen Diätverordnung zugelassen sind.

Die Dichtungen bzw. Dichtungsteile, die Verpackungen bzw. Teile der Verpackung von Ausgangsstoffen und/oder die Verpackungseinheiten bzw. Teile davon enthalten einen Marker, wie eine vorstehend beschriebene detektierbare Verbindung. Dieser Marker kann bereits während des Herstellungsverfahrens in die Dichtungen oder Teile davon, die Verpackung der Ausgangsstoffe oder Teile davon und/oder die Verpackungseinheiten oder Teile davon eingebracht werden. Der Marker ist insbesondere bevorzugt homogen in der Dichtung, der Verpackung und/oder der Verpackungseinheit verteilt, dass heißt es eignen sich bevorzugt pulverförmige Substanzen als Marker, die der Dichtungs- Verpackungs- und/oder Verpackungseinheiten-Rezeptur beigemischt werden. Eine solche homogene Verteilung kann somit durch das Einverleiben des Markers bei der Herstellung der Dichtungen, Verpackungen und/oder Verpackungseinheiten erreicht werden.

Der Marker kann auch auf die Dichtung oder Teile davon, die Verpackung der Ausgangsstoffe oder Teile davon und/oder die Verpackungseinheiten bzw. Teile davon mittels einer Beschichtung oder eines Überzug, die bzw. der den Marker oder die detektierbare Verbindung enthält, aufgebracht werden, es ist jedoch bevorzugt, dass der Marker homogen in der Dichtung, Verpackung und/oder Verpackungseinheit verteilt ist.

Die fließfähigen Lebensmittel können bevorzugt in Schritt b) des erfindungsgemäßen Verfahrens, an einem Detektor für die berührungslose Detektion der Dichtungsteile, Teile der Verpackung von Ausgangsstoffen und/oder Teile von Verpackungseinheiten, die mit einem Marker versehen sind, vorbeigeführt werden. In Abhängigkeit von dem Marker kann der Detektor ein Röntgengerät und/oder ein mit einem elektromagnetischen Feld detektierendes Gerät, wie ein Metallsuchgerät, sein. Wenn der Detektor ein Röntgengerät ist, dann ist der Marker eine mittels Röntgenstrahlung detektierbare Verbindung; wenn der Detektor ein mit einem elektromagnetischem Feld detektierendes Gerät, wie ein Metallsuchgerät ist, dann ist der Marker eine damit detektierbare Verbindung, wie eine eisenhaltige Verbindung.

Insbesondere hat sich überraschend herausgestellt, dass die Erkennung besonders sicher durchgeführt werden kann, wenn als Detektor ein Röntgengerät verwendet wird und als Marker sowohl eine mittels Röntgenstrahlung, als auch eine mittels elektromagnetischem Feld detektierbare Verbindung in den Dichtungsteilen und/oder Teilen der Verpackung von Ausgangsstoffen und/oder Teilen von Verpackungseinheiten anwesend ist, insbesondere ein Kontrastmittel, wie BaSO₄, und eine eisenhaltige Verbindung, wie Fe₂(CO)₉. Dabei ergibt sich eine sich synergistische Wirkung im Röntgenlicht und die markierten Dichtungsteile und/oder Teile der Verpackung von Ausgangsstoffen und/oder Teile von Verpackungseinheiten können besonders wirksam erkannt und ausgeschleust werden.

Die Detektion in Schritt b) kann vor dem Abfüllen der Lebensmittel in die Verpackungseinheiten durchgeführt werden. Dabei können Teile von Dichtungen und/oder Teile der Verpackung von Ausgangsstoffen detektiert werden, die mit einem Marker versehen sind. Die Detektoren können beispielsweise in Fließrichtung des abzufüllenden Produktes angeordnet und unmittelbar vor dem Füller positioniert sein. Das abzufüllende Produkt kann mittels Rohrleitung transportiert werden.

Die Detektion in Schritt b) kann auch nach dem Abfüllen der Lebensmittel in die Verpackungseinheiten durchgeführt werden. Dazu werden die mit dem Lebensmittel befüllten Verpackungseinheiten an einem Detektor vorbeigeleitet. Dabei können Teile von Dichtungen, Teile von Verpackungen der Ausgangsmaterialien und/oder Teile zu Bruch gegangener und in nachfolgende Verpackungseinheiten eingeschleuster Verpackungseinheiten detektiert werden. Der Detektor, bevorzugt ein Röntgengerät, kann dazu unmittelbar nach der Verschließmaschine angeordnet sein und dabei wird das verschlossene Gebinde untersucht.

Die Detektion kann allgemein dadurch stattfinden, dass der Grad der Absorption, welcher gegenüber nicht mit Dichtungsteilen und/oder Teilen der Verpackung von Ausgangsstoffen und/oder Teilen der Verpackungseinheiten versetzten Verpackungseinheiten höher ist, festgestellt wird.

Die Detektion nach der Abfüllung der Lebensmittel kann unter Verwendung eines Röntgengeräts dadurch durchgeführt werden, dass das von dem zu detektierenden Gebinde bzw. der Verpackungseinheit aufgenommene Bild mit einem Referenzbild verglichen, mittels Bildverarbeitung basierend auf Kontrastunterschiede untersucht wird und sodann eine Auswerteelektronik entscheidet, ob ein Fehler vorliegt oder nicht bzw. ob das Gebinde oder die Verpackungseinheit als detektiert gilt oder nicht. Bei einem Unterschied zwischen beiden Bildern kann eine Ausschleuseeinheit aktiviert und das auffällige Gebinde bzw. die Verpackungseinheit automatisch ausgeschleust werden.

Ähnlich kann unter Verwendung eines Röntgengeräts der Lebensmittelfluß vor dem Abfüllen untersucht werden und wiederum das aufgenommene Bild mit einem Referenzbild verglichen werden, wie vorstehend beschrieben. Bevorzugt findet die Untersuchung des Lebensmittelflusses mittels des Röntgengeräts kontinuierlich statt und das Referenzbild wird kontinuierlich mit dem gemessenen Bild verglichen. Bei einer Detektion kann dann mittels eines Ventils das detektierte Lebensmittel ausgeschleust werden.

Falls ein Metallsuchgerät zur Detektion verwendet wird, wird die Störung des elektromagnetischen Feldes durch ein metallisches Teil elektronisch erfasst und mittels eines Signals registriert. Wenn ein Signal registriert wird, insbesondere wenn eine bestimmten Signalhöhe überschritten wird, wird ein Ventil geöffnet und das betroffene Produkt aus dem kontinuierlichen Produktstrom ausgeschleust.

In Schritt c) kann ein detektiertes Dichtungsteil und/oder Teil der Verpackung von Ausgangsstoffen vor dem Erreichen der Verpackungseinheit für das fertige fließfähige Lebensmittel aus dem Lebensmittelfluß ausgeschleust werden. Es ist auch möglich, nach dem Abfüllen der Lebensmittel, detektierte Dichtungsteile, Teile der Verpackung von Ausgangsstoffen und, zusätzlich, Teile von Verpackungseinheiten auszuschleusen. Zum Ausschleusen kann beispielsweise eine Ausschleuseeinheit aktiviert und das detektierte Gebinde oder die detektierte Verpackungseinheit automatisch ausgeschleust werden. Bei Kleingebinden kann auch das detektierte Gebinde über eine Ausstoßvorrichtung aus dem Transportfluß geschoben werden.

Wenn die Detektion in einer Rohrleitung mit dem Lebensmittelfluß erfolgt, kann ein Ventil geöffnet oder ein Umschaltventil betätigt und das detektierte Produkt aus dem kontinuierlichen Produktstrom ausgeschleust werden.

Nach dem Entfernen der detektierten Dichtungsteile und/oder Teile der Verpackung von Ausgangsstoffen können die hergestellten Lebensmittel in Verpackungseinheiten abgefüllt oder dem weiteren Verpackungsprozess zugeführt werden. Verpackungseinheiten im Sinne der Erfindung sind alle Einheiten, in die hergestellte Lebensmittel abgefüllt werden können, wie Flaschen, Beutel, Kartons etc.

Mit dem erfindungsgemäßen Verfahren können mit einem Marker versehene Dichtungsteilen und/oder Teilen der Verpackung von Ausgangsstoffen und/oder Teilen von Verpackungseinheiten in fließfähigen Lebensmitteln vor dem Abfüllen in Verpackungseinheitenbzw. die befüllten Verpackungseinheiten sicher detektiert und ausgeschleust werden.

Das Verfahren ist hervorragend geeignet, sicher zu stellen, dass keine Dichtungsteile, Teile der Verpackung von Ausgangsstoffen oder Teile von zu Bruch gegangener Verpackungseinheiten in das abgefüllte Lebensmittel eingebracht und letztlich an Kunden ausgeliefert werden.

Die Erfindung betrifft ferner eine markierte Dichtung, Verpackung der Ausgangsstoffe und Verpackungseinheiten, die bevorzugt mit einer vorstehend beschriebenen Verbindung ausgestattet ist. Die Dichtung umfasst bevorzugt Silicon und ist bevorzugt eine Dichtung für Milchrohrverschraubungen. Die Verpackungen der Ausgangsstoffe können Flaschen, Tüten, Behälter etc. aus den vorstehend in Bezug auf das Verfahren beschriebenen Materialien sein. Die Verpackungseinheiten sind bevorzugt, Flaschen, Tüten, Gläser etc., die bevorzugt Kunststoff, wie einem Polyolefin, beispielsweise Polyethylen, oder Glas umfassen.

Die Dichtung, Verpackung der Ausgangsstoffe und/oder Verpackungseinheit ist bevorzugt, wie vorstehend in Bezug auf das erfindungsgemäße Verfahren beschrieben.

## Patentansprüche

1. Verfahren zum Verhindern des Einschleusens von Dichtungsteilen und/oder Teilen der Verpackung von Ausgangsstoffen in Verpackungseinheiten und/oder Teilen von Verpackungseinheiten in nachfolgende Verpackungseinheiten fließfähiger Lebensmittel, die gegebenenfalls in einem Dichtungen enthaltenden Herstellungssystem, gegebenenfalls unter Verwendung von aus Verpackungen entnommenen Ausgangsstoffen, hergestellt und in Verpackungseinheiten abgefüllt werden, wobei
a) die Dichtungen, Verpackungen der Ausgangsstoffe und/oder Verpackungseinheiten der fließfähigen Lebensmittel mit wenigstens einem berührungslos detektierbaren Marker versehen sind und/oder werden;
b) vor dem Einbringen der Lebensmittel in die Verpackungseinheiten der Lebensmittelfluß an einem auf den Marker ansprechenden Detektor vorbei geleitet wird und/oder nach dem Einbringen der Lebensmittel in die Verpackungseinheit die mit dem Lebensmittel befüllte Verpackungseinheit an einem auf den Marker ansprechenden Detektor vorbei geleitet wird, und
c) detektierte Dichtungsteile und/oder Teile der Verpackung von Ausgangsstoffen vor Erreichen der Verpackungseinheiten ausgeschleust werden und/oder
detektierte Verpackungseinheiten ausgeschleust werden.

2. Verfahren nach Anspruch 1, wobei der Marker eine mittels Röntgenstrahlung oder eines elektromagnetischen Felds detektierbarer Stoff ist.

3. Verfahren nach Anspruch 2, wobei der detektierbare Stoff eine Barium-haltige, Eisen-haltige Verbindung oder ein Gemisch davon ist.

4. Verfahren nach Anspruch 3, wobei die Barium-haltige Verbindung Ba₂SO₄ und die Eisen-haltige Verbindung Fe₂(CO)₉ ist.

5. Verfahren nach einem der vorstehenden Ansprüche, wobei der Detektor ein Röntgengerät und/oder ein Metallsuchgerät, auf elektromagnetischer Basis arbeitend, ist.

6. Mit einem Marker versehene Dichtung für eine Lebensmittel-Produktions-Anlage, wobei der Marker wenigstens einen mittels Röntgenstrahlung oder eines elektromagnetischen Felds detektierbaren Stoff umfasst.

7. Dichtung nach Anspruch 6, wobei der Marker wenigstens eine Barium-haltige, Eisen-haltige Verbindung oder eine Gemisch davon ist.

8. Mit einem Marker versehene Verpackung von Ausgangsstoffen für die Herstellung von fließfähigen Lebensmitteln, wobei der Marker wenigstens einen mittels Röntgenstrahlung oder eines elektromagnetischen Felds detektierbaren Stoff umfasst.

9. Verpackung nach Anspruch 8, wobei der Marker wenigstens eine Barium-haltige, Eisen-haltige Verbindung oder ein Gemisch davon ist.

10. Mit einem Marker versehene Verpackungseinheit für die Abfüllung von fließfähigen Lebensmitteln aus einer Lebensmittelproduktionsanlage, wobei der Marker wenigstens einen mittels Röntgenstrahlung oder eines elektromagnetischen Felds detektierbaren Stoff umfasst.

11. Verpackungseinheit nach Anspruch 10, wobei der Marker wenigstens eine Barium-haltige, Eisen-haltige Verbindung oder ein Gemisch davon ist.

12. Verpackungseinheit nach einem der Ansprüche 10 oder 11, wobei die Verpackungseinheit eine Tüte, Behälter, Flasche oder Glas ist.
